# EUROPEAN PATENT APPLICATION

(11) **EP 3 379 214 A1**
(43) Date of publication of application: **26.09.2018**
(21) Application number: 18163132.6
(22) Date of filing: 21.03.2018
(51) Int. Cl.: G01J 3/18, G01J 3/26, G02B 5/18, G02B 5/20, G02B 27/44, G01J 3/02

(54) **OPTICAL FILTER AND SPECTROMETER INCLUDING SUB-WAVELENGTH DOUBLE GRATING STRUCTURE, AND OPTICAL APPARATUS INCLUDING THE OPTICAL FILTER AND SPECTROMETER**

(30) Priority: 24.03.2017 KR 20170037672
(71) Applicant: Samsung Electronics Co., Ltd., Gyeonggi-do 16677 (KR)
(72) Inventor: BAIK, Chanwook, 16678 Gyeonggi-do (KR); KIM, Jaekwan, 16678 Gyeonggi-do (KR); SONG, Byonggwon, 16678 Gyeonggi-do (KR); YANG, Kiyeon, 16678 Gyeonggi-do (KR); LEE, Jaesoong, 16678 Gyeonggi-do (KR); LEE, Jeongyub, 16678 Gyeonggi-do (KR); CHO, Kyungsang, 16678 Gyeonggi-do (KR)
(74) Representative: Portch, Daniel

(57) **Abstract**

An optical filter may include a first reflector and a second reflector. The first reflector may include a plurality of first gratings having a first sub-wavelength dimension and being arranged to recur at a first interval in a first direction. The second reflector may be spaced apart from the first reflector and include a plurality of second gratings having a second sub-wavelength dimension and arranged to recur at a second interval in a direction parallel to the first direction. The first reflector and the second reflector may include different materials or different geometric structures from each other. Accordingly, it is easy to adjust the transmission wavelength characteristics of the optical filter.

## Description

### FIELD OF THE INVENTION

The present disclosure relates to optical filters and spectrometers including sub-wavelength double grating structures and optical apparatuses including the optical filters and the spectrometers.

### BACKGROUND OF THE INVENTION

Optical devices for changing the transmission, reflection, polarization, phase, intensity, path, etc. of incident light are used in various optical fields. Attempts have recently been made to create miniaturized optical devices that have various optical properties by using structures of sub-wavelength dimensions.

Sub-wavelength structures may also be applied to spectrometers. In general, a resonance structure having a specific resonance wavelength may be achieved by separating two reflectors by a predetermined distance. Distributed Bragg reflectors, in which material layers having different refractive indices are repeatedly stacked to a thickness of 1/4 of the wavelength, may be used as the two reflectors. In this case, since the number of layers stacked has to be increased in order to increase reflectance and since a resonance wavelength is obtained by adjusting the distance between the reflectors, it is not easy to obtain a desired resonance wavelength with a miniaturized form factor.

### SUMMARY OF THE INVENTION

Provided are spectrometers having small volumes and excellent spectral performance by using sub-wavelength double grating structures.

Additional aspects will be set forth in part in the description which follows and, in part, will be apparent from the description, or may be learned by practice of the presented example embodiments.

According to an aspect of an example embodiment, an optical filter may include: a first reflector including a plurality of first gratings having a first sub-wavelength dimension and being arranged to recur at a first interval in a first direction; and a second reflector spaced apart from the first reflector and including a plurality of second gratings having a second sub-wavelength dimension being arranged to recur at a second interval in a second direction parallel to the first direction. The first reflector and the second reflector may include different materials or different geometric structures from each other.

Accordingly, there may be proposed an optical filter device for a spectroscope which employs a sub-wavelength double grating structure based on a sub-wavelength meta-surface concept.

It is proposed that a conventional optical device for a spectroscope controls the transmittance or the reflectivity depending on the structure or the property of the material positioned on the path through which the light passes by using optical characteristics such as reflection, refraction, diffraction and polarization. Particularly, it may depend greatly on the refractive index (n, k) of the material. The light transmission characteristic may thus be changed by the difference of the refractive index. However, since it is difficult to obtain desired characteristics only by the difference in refractive index, it is proposed to use the shape and position together so as to change the light transmission characteristics.

Embodiments may thus employ a subwavelength double grating scheme. In this case, if a structure including a simple symmetric double grating structure is made as a structure including an asymmetric double grating, its spectral characteristics may be improved and it is possible to freely design and apply in a wider band. In particular, since the transmittance according to wavelength may be controlled in a lateral (in-plane) direction with respect to vertically incident light, the semiconductor process for the proposed structure is easy, and it may then be possible to perform monolithic integration on a CIS image sensor.

Proposed concepts may employ a subwavelength double grating structure where upper and lower grating are asymmetrically disposed. Parameters for designing the gratings may then be further increased by four when compared to the existing symmetric double grating structures. Accordingly, the Fabry-Perot resonance wavelength can be more finely adjusted than the symmetric structure by using the upper and lower asymmetric structures. Since various parameters may be applied in this way, the degree of freedom of design may be increased because the selection width becomes very wide.

Accordingly, a proposed embodiment may comprise spectroscopic structure and a spectroscope, having a subwavelength double grating structure, with selective transmittance according to wavelength of incident light by using phase difference and transmittance of transmitted or reflected light in each grating layer with respect to incident light (e.g. visible light or infrared ray).

The first sub-wavelength dimension may be different from the second sub-wavelength dimension or the first interval may be different from the second interval.

The first interval may be identical to the second interval. First widths of first cross-sections of the plurality of first gratings perpendicular to a first longitudinal direction of the plurality of first gratings may be different from second widths of second cross-sections of the plurality of second gratings perpendicular to second a longitudinal direction of the plurality of second gratings.

The plurality of first gratings may include a first material having a first refractive index and the plurality of second gratings may include a second material having a second refractive index different form the first refractive index.

The plurality of first gratings and the plurality of second gratings may be arranged so that longitudinal directions of the plurality of first gratings and the plurality of second gratings are parallel to each other.

Cross-sections of the plurality of first gratings and the plurality of second gratings in directions perpendicular to longitudinal directions of the plurality of first gratings and the plurality of second gratings may have one of rectangular shapes, trapezoidal shapes, polygonal shapes, circular shapes, elliptical shapes, semi-circular shapes, and semi-elliptical shapes.

The optical filter may further include: a substrate configured to support the plurality of first gratings and including a third material having a third refractive index less than a first refractive index of the plurality of first gratings.

The optical filter may further include: a fourth material layer having a fourth refractive index less than the first refractive index of the plurality of first gratings and configured to cover the plurality of first gratings.

The optical filter may further include: a fifth material layer located on the fourth material layer, having a fifth refractive index less than a second refractive index of the plurality of second gratings, and configured to cover the plurality of second gratings.

The first refractive index of the plurality of first gratings and the second refractive index of the plurality of second gratings may be identical.

The fourth material layer and the fifth material layer may include an identical material.

According to an aspect of an example embodiment, a spectrometer may include: a sensor substrate including a plurality of light detection elements; and a plurality of optical filters arranged to respectively correspond to the plurality of light detection elements, each optical filter of the plurality of optical filters having a transmission wavelength band that is different from transmission wavelength bands of other optical filters of the plurality of optical filters. Each of the plurality of optical filters may include: a first reflector including a plurality of first gratings having a first sub-wavelength dimension and being arranged to recur at a first interval in a first direction; and a second reflector spaced apart from the first reflector and including a plurality of second gratings, the plurality of second gratings having a second sub-wavelength dimension and being arranged to recur at a second interval in a second direction parallel to the first direction. The first reflector and the second reflector may have different materials or different geometric structures from each other.

Center wavelengths of transmission wavelength bands of the plurality of optical filters may be distributed in a predetermined wavelength band.

The plurality of first gratings included in the each of the plurality of optical filters may have a uniform thickness.

The plurality of second gratings included in the each of the plurality of optical filters may have a uniform thickness.

Longitudinal directions of the plurality of first and second gratings included in the plurality of optical filters may be parallel to one another.

The sensor substrate and the plurality of optical filters may be monolithically formed.

The spectrometer may further include: a polarizer having a polarization axis parallel to the longitudinal directions so that polarized light parallel to the longitudinal directions is incident on the plurality of optical filters.

The plurality of optical filters may include: a first group of optical filters whose gratings have a first longitudinal direction parallel to a first direction; and a second group of optical filters whose gratings have a second longitudinal direction perpendicular to the first direction.

At least one optical filter included in the first group of optical filters and at least one optical filter included in the second group of optical filters may have an identical transmission wavelength band.

According to an aspect of an example embodiment, an optical apparatus includes: a light source configured to emit light to an object; the spectrometer located on an optical path of the light emitted by the light source and reflected from the object; and an analyzer configured to analyze at least one from among a physical property, a shape, a position, and a movement of the object by analyzing the light detected by the spectrometer.

### BRIEF DESCRIPTION OF THE DRAWINGS

These and/or other aspects will become apparent and more readily appreciated from the following description of the example embodiments, taken in conjunction with the accompanying drawings in which:
FIG. 1 is a cross-sectional view illustrating a structure of an optical filter according to an example embodiment;
FIG. 2 is a perspective view illustrating two reflectors included in the optical filter according to an example embodiment, for explaining the principle of transmitting light of a specific wavelength;
FIG. 3 illustrates graphs showing transmission characteristics according to a change in variables related to an asymmetric shape of the optical filter according to an example embodiment;
FIG. 4 illustrates graphs showing transmission characteristics according to a change in variables related to an asymmetric shape of the optical filter according to another example embodiment;
FIG. 5 illustrates graphs showing transmission characteristics according to a change in variables related to an asymmetric shape of the optical filter according to another example embodiment;
FIG. 6 illustrates graphs showing the optical filter achieving transmission spectra having small full widths at half maximum (FWHMs) and high transmittances with respect to various center wavelengths according to an example embodiment;
FIG. 7 is a cross-sectional view illustrating a structure of a spectrometer according to an example embodiment;
FIG. 8 is a cross-sectional view illustrating a structure of a spectrometer according to another example embodiment;
FIG. 9 is a plan view illustrating a structure of a spectrometer according to another example embodiment;
FIG. 10 is a cross-sectional view taken along line A-A' of FIG. 9; and
FIG. 11 is a block diagram illustrating a configuration of an optical apparatus according to an example embodiment.

### DETAILED DESCRIPTION

Reference will now be made in detail to example embodiments, which are illustrated in the accompanying drawings. In the drawings, like reference numerals refer to like elements and sizes of elements may be exaggerated for clarity and convenience. In this regard, the present embodiments may have different forms and should not be construed as being limited to the descriptions set forth herein.

It will be understood that when a component is referred to as being "on" another component, the component can be directly on the other component or intervening components may be present thereon.

While such terms as "first," "second," etc. may be used to describe various components, such components are not limited to the above terms. The above terms are used only to distinguish one component from another. In other words, terms such as "first," "second," etc. do not necessarily imply order, preference, or importance.

As used herein, the singular forms "a," "an," and "the" are intended to include the plural forms as well and vice versa, unless the context clearly indicates otherwise. It will be further understood that the terms "comprises" and/or "comprising" used herein specify the presence of stated features or components, but do not preclude the presence or addition of one or more other features or components.

In addition, terms such as "unit," "module," or the like refer to units that perform at least one function or operation, and the units may be implemented as hardware (e.g., a circuit, a microchip, a processor, etc.), software, or as a combination of hardware and software.

Connecting lines, or connectors shown in the various figures presented are intended to represent exemplary functional relationships and/or physical or logical couplings between various elements. It should be noted that many alternative or additional functional relationships, physical connections or logical connections may be present in a practical device.

Expressions such as "at least one of," when preceding a list of elements, modify the entire list of elements and do not modify the individual elements of the list.

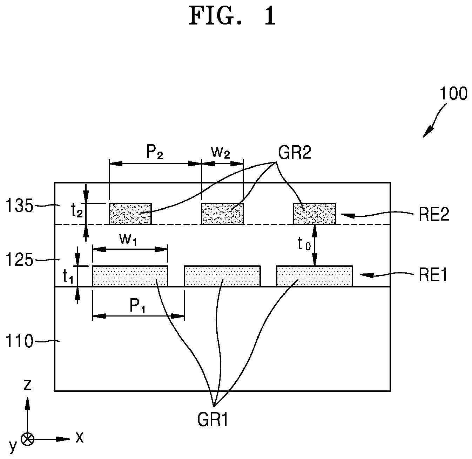

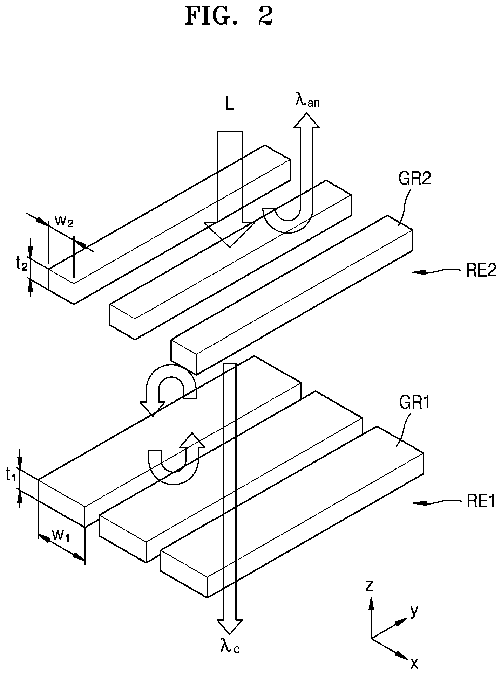

FIG. 1 is a cross-sectional view illustrating a structure of an optical filter 100 according to an example embodiment. To explain the principle of transmitting light of a specific wavelength, FIG. 2 is provided to illustrate a perspective view of first and second reflectors RE1 and RE2 provided in the optical filter 100 according to an example embodiment.

The optical filter 100 may include the first reflector RE1 and the second reflector RE2 that are spaced apart from each other. The first reflector RE1 and the second reflector RE2 may include grating structures with sub-wavelength dimensions.

A plurality of first gratings GR1 constituting the first reflector RE1 are periodically arranged with a first period P₁ in one direction. The term "period" as used herein may refer to the regular distance or interval at which a series of objects are repeatedly arranged. Thus, a periodically arranged gratings may be spatially arranged at substantially regular intervals and those intervals may be uniform. The direction in which the plurality of first gratings GR1 are arranged may be an x-direction. The first gratings GR1 may have stripe shapes and a longitudinal direction of the first gratings GR1 may be a y-direction. Cross-sections of the first gratings GR1 in a direction perpendicular to the longitudinal direction may have rectangular shapes having a width w₁ and a thickness (or height) t₁. A plurality of second gratings GR2 constituting the second reflector RE2 are periodically arranged with a second period P₂ in a direction parallel to the direction in which the first gratings GR1 are arranged. The second gratings GR2 may have stripe shapes running in a parallel direction to the stripe shapes of the first gratings GR1. Cross-sections of the second gratings GR2 in the direction perpendicular to the longitudinal direction may have rectangular shapes having a width w₂ and a thickness t₂.

Shape dimensions w₁, w₂, t₁, t₂, p₁, and p₂ related to the first gratings GR1 and the second gratings GR2 may have sub-wavelength values. The sub-wavelength refers to a length value that is less than an operating wavelength and less than a center wavelength of a transmission wavelength band of the optical filter 100, that is, a resonance wavelength λ_{c} of a Fabry-Perot resonator formed by the first and second reflectors RE1 and RE2.

The optical filter 100 according to an example embodiment may adjust a transmission wavelength band by using a sub-wavelength double grating structure and employ an asymmetric structure in order to more finely adjust performance and a wavelength band.

The expression "asymmetric structure" may be used to indicate a different structure from a symmetric structure in which the first reflector RE1 and the second reflector RE2 are identical, and the first reflector RE1 and the second reflector RE2 in the optical filter 100 according to an example embodiment are asymmetric with regard to optical materials or geometric structures.

When the first reflector RE1 and the second reflector RE2 are asymmetric with regard to the geometric structures, the first reflector RE1 and the second reflector RE2 are different from each other in at least one from among variables w₁, t₁, and p₁ of the first reflectors RE1 and variables w₂, t₂, and p₂ of the second reflector RE2. In other words, the first reflector RE1 and the second reflector RE2 may have a different width, thickness, and/or period from each other.

When the first reflector RE1 and the second reflector RE2 are asymmetric with regard to optical materials, optical materials of the first gratings GR1 of the first reflector RE1 may be different from optical materials of the second gratings GR2 of the second reflector RE2. The optical materials may be expressed by a refractive index or an absorption coefficient for light, and the following will be explained based on a refractive index.

Referring to FIG. 2, the first reflector RE1 and the second reflector RE2 may form a Fabry-Perot resonator.

The Fabry-Perot resonator is formed by a cavity between the first and second reflectors RE1 and RE2 having a high reflectance. Light entering a space between the first and second reflectors RE1 and RE2 may reciprocate between the first and second reflectors RE1 and RE2 that face each other, which results in constructive interference and destructive interference. In this case, light of a wavelength corresponding to a resonance wavelength λ_{c} may satisfy a constructive interference condition and may pass through the Fabry-Perot resonator. Light λₐₙ of another wavelength band may not pass through the Fabry-Perot resonator. The performance of the Fabry-Perot resonator is generally considered to be better when the Fabry-Perot resonator has a smaller bandwidth with respect to the resonance wavelength λ_{c} corresponding to a transmission spectrum. The performance of the Fabry-Perot resonator may be defined via a quality (Q) factor or a full width at half maximum (FWHM).

Since the optical filter 100 according to an example embodiment employs a sub-wavelength grating structure as a reflector of the Fabry-Perot resonator, the optical filter 100 may have a high reflectance and a minimized volume.

The resonance wavelength λ_{c} that passes through the Fabry-Perot resonator is determined by optical materials and geometric structures of the first reflector RE1 and the second reflector RE2. For example, the resonance wavelength λ_{c} and a waveform of the transmission spectrum are determined by refractive indices of the first gratings GR1 and the second gratings GR2, a refractive index of a surrounding material, variables w₁, w₂, t₁, t₂, p₁, and p₂ related to geometric structures of the first and second reflectors RE1 and RE2, and a distance t₀ between the first and second reflectors RE1 and RE2.

Although three first gratings GR1 are included in the first reflectors RE1 and three second gratings GR2 are included in the second reflector RE2 in FIG. 1, embodiments are not limited thereto and the number of the first gratings GR1 and the second gratings GR2 may be changed to fewer than three or more than three gratings. For example, tens to hundreds of first gratings GR1 and second gratings GR2 may be repeatedly arranged as long as the first gratings GR1 and the second gratings GR2 have a grating regularity that is large enough to form the Fabry-Perot resonator.

The optical filter 100 according to an example embodiment may have a high degree of freedom in performance such as a desired wavelength band and a desired bandwidth by using asymmetry of the first and second reflectors RE1 and RE2 with regard to optical materials or geometric structures. Accordingly, the optical filter 100 may be used as a narrow band-pass filter or may be applied to a spectrometer having excellent spectral performance in a wide wavelength band.

A detailed configuration of the optical filter 100 will now be explained.

As shown in FIG. 1, the optical filter 100 may further include a substrate 110 that supports the plurality of first gratings GR1. The substrate 110 may include a third material having a third refractive index less than a refractive index of the first gratings GR1.

A fourth material layer 125 may be formed on the first gratings GR1. The fourth material layer 125 may include a material having a refractive index less than a refractive index of the first gratings GR1. The fourth material layer 125 may be formed to cover the plurality of first gratings GR1 and may support the plurality of second gratings GR2. A fifth material layer 135 may be formed to cover the second gratings GR2. The fifth material layer 135 may include a material having a refractive index less than a refractive index of the second gratings GR2.

Any of various materials having a high refractive index may be used as materials of the first gratings GR1 and the second gratings GR2. For example, any one from among monocrystalline silicon, polycrystalline silicon, amorphous silicon, titanium oxide (TiO₂), titanium nitride (TiN), silicon nitride (SiN), and a transparent conductive oxide (ITO) may be used as materials of the first gratings GR1 and the second gratings GR2. Alternatively, a group III-V semiconductor compound such as gallium arsenide (GaAs) or gallium phosphide (GaP) may be used as materials of the first gratings GR1 and the second gratings GR2. Alternatively, a metal or a metal oxide may be used as materials of the first gratings GR1 and the second gratings GR2.

The first gratings GR1 and the second gratings GR2 may include materials having different refractive indices. However, embodiments are not limited thereto, and when geometric shapes of the first reflector RE1 and the second reflector RE2 are different from each other, that is, when the first reflector RE1 and the second reflector RE2 are different from each other in at least one from among the widths w₁ and w₂, the thicknesses t₁ and t₂, and the periods p₁ and p₂, the first gratings GR1 and the second gratings GR2 may include materials having the same refractive index.

Although the cross-sections of the first gratings GR1 and the second gratings GR2 in the direction perpendicular to the longitudinal direction have rectangular shapes, embodiments are not limited thereto, and the cross-sections may have any of various shapes such as trapezoidal shapes, polygonal shapes, circular shapes, elliptical shapes, semi-circular shapes, or semi-elliptical shapes.

The fourth material layer 125 and the fifth material layer 135 may include low refractive index materials having a refractive index less than a refractive index of the first gratings GR1 and the second gratings GR2. For example, the fourth material layer 125 and the fifth material layer 135 may include at least one from among silicon oxide (SiO₂), a polymer-based material (e.g., SU-8 or poly(methyl methacrylate) (PMMA)), and hydrogen silsesquioxane (HSQ). The fourth material layer 125 and the fifth material layer 135 may include the same material.

Regarding the asymmetry in the geometric shapes, any of various variable combinations of the first reflector RE1 and the second reflector RE2 may be selected. For example, the thicknesses t₁ and t₂ of the first gratings GR1 and the second gratings GR2 may be the same, the widths w₁ and w₂ of the first gratings GR1 and the second gratings GR2 may be different from each other, and the periods p₁ and p₂ of the first gratings GR1 and the second gratings GR2 may be different from each other. All of the variables may be different or two of the variables may be the same and the remaining one of the variables may be different from the two previous variables.

The optical filter 100 employing an asymmetric structure may more easily obtain a wide wavelength band, adjust a position of a wavelength band, and have an FWHM than an optical filter having a symmetric structure, and may easily consider the ease of a process.

The optical filter 100 may be applied as a narrow band-pass filter to various optical apparatuses. For example, a color filter may be realized by forming a plurality of optical filters having red, green, and blue wavelengths as transmission bands and repeatedly arranging the plurality of optical filters. The color filter may have high color purity and may be applied to various types of display devices.

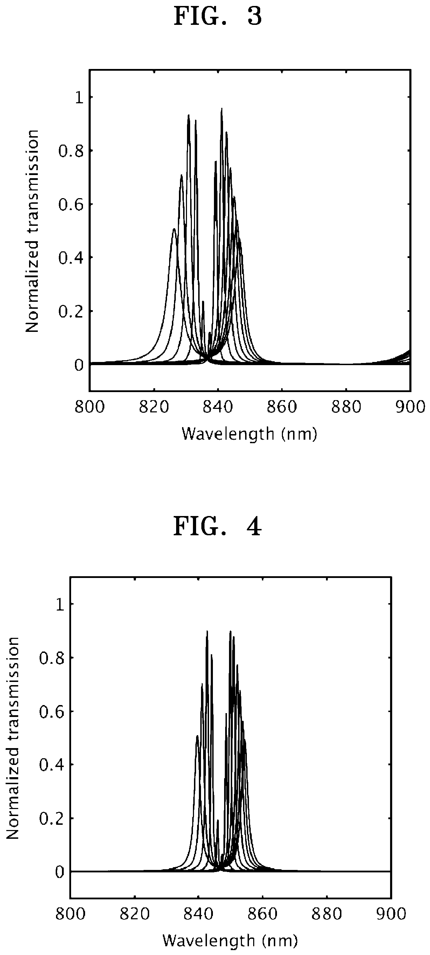

FIG. 3 illustrates graphs showing transmission characteristics according to a change in variables related to an asymmetric shape of the optical filter 100 according to an example embodiment.

The graphs are transmission spectra obtained when the periods p₁ and p₂ are set to be the same, the thicknesses t₁ and t₂ are set to be the same, the widths w₁ and w₂ are set to be different from each other, the width w₂ is fixed at 270 nm, and the width w₁ varies between 150 nm and 400 nm.

It is found that various types of transmission spectra having center wavelengths ranging from about 825 nm to about 845 nm may be obtained as variables are adjusted. A transmission spectrum having a high transmittance and a small FWHM (or a high Q factor) may be selected according to needs from among the transmission spectra.

FIG. 4 illustrates graphs showing transmission characteristics according to a change in variables related to an asymmetric shape of the optical filter 100 according to another example embodiment.

The graphs are transmission spectra obtained when the periods p₁ and p₂ are set to be the same but are different from those in FIG. 3, the thicknesses t₁ and t₂ are set to be the same, the widths w₁ and w₂ are set to be different from each other, the width w₂ is fixed at 260 nm, and the width w₁ varies between 235 nm and 295 nm.

It is found that various types of transmission spectra having center wavelengths ranging from about 840 nm to about 855 nm may be obtained as variables are adjusted. A transmission spectrum having a high transmittance and a small FWHM may be selected according to needs from the transmission spectra.

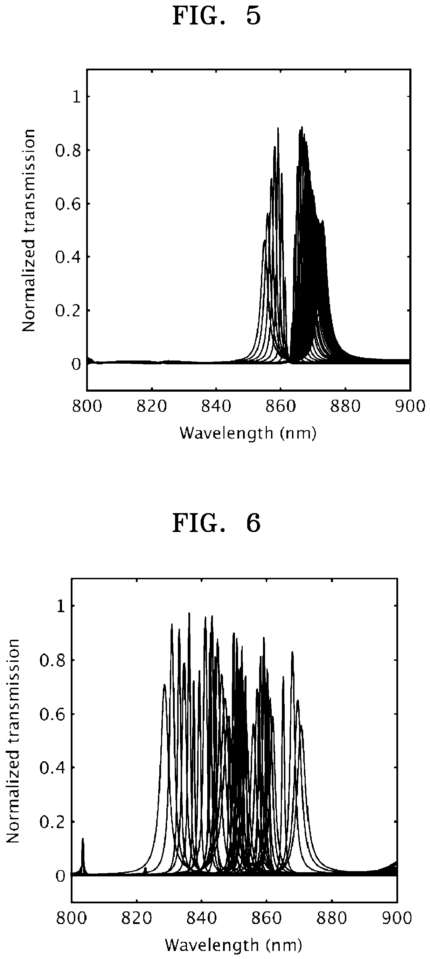

FIG. 5 illustrates graphs showing transmission characteristics according to a change in variables related to an asymmetric shape of the optical filter 100 according to another example embodiment.

The graphs are transmission spectra obtained when the periods p₁ and p₂ are set to be the same but are different from those in FIGS. 3 and 4, the thicknesses t₁ and t₂ are set to be the same, the widths w₁ and w₂ are set to be different from each other, the width w₂ is fixed at 260 nm, and the width w₁ varies between 150 nm and 400 nm.

It is found that various types of transmission spectra having center wavelengths ranging from about 855 nm to about 875 nm may be obtained as variables are adjusted. A transmission spectrum having a high transmittance and a small FWHM may be selected according to needs from the transmission spectra.

FIG. 6 illustrates graphs showing the optical filter 100 achieving transmission spectra having small FWHMs and high transmittances with respect to various center wavelengths according to an example embodiment.

The graphs are obtained by selecting transmission spectra having FWHMs of about 1 nm or less and transmittances close to 1 with respect to several center wavelengths in the graphs of FIGS. 3 through 5. It is found that transmission spectra having small FWHMs and center wavelengths that are uniformly distributed between about 830 nm and about 870 nm and FWHMs may be achieved.

The above graphs are exemplary, and transmission spectra having small FWHMs and center wavelengths that are uniformly distributed in various wavelength bands as well as the above wavelength bands may be achieved. A spectrometer having excellent spectral performance may be achieved by using various asymmetric shapes of the optical filter 100 related to the transmission spectra.

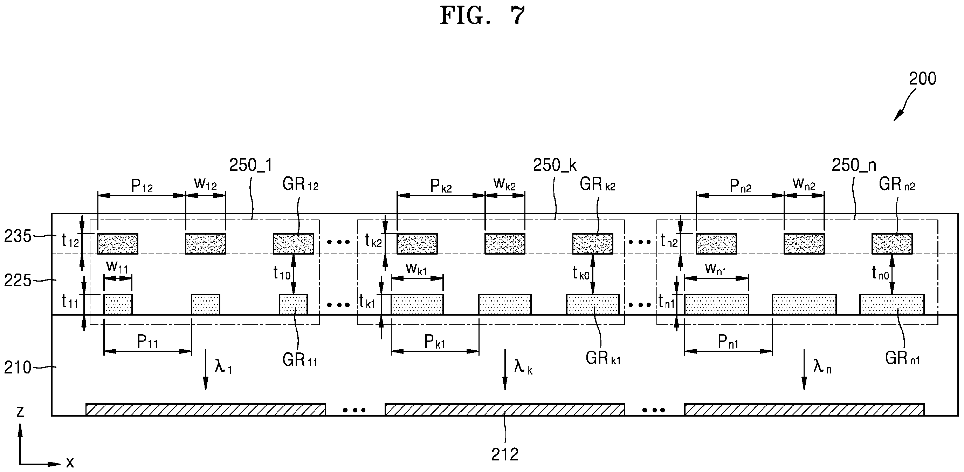

FIG. 7 is a cross-sectional view illustrating a structure of a spectrometer 300 according to an example embodiment.

The spectrometer 300 may include a sensor substrate 210 including a plurality of light detection elements 212, and a plurality of optical filters 250_k (where k=1, ... , and n) arranged to respectively correspond to the plurality of light detection elements 212 and having different transmission wavelength bands. For example, photodiodes, phototransistors, or charge-coupled devices (CCDs) may be used as the plurality of light detection elements 212. The number n of the optical filters 250_k may be appropriately determined according to the use of the spectrometer 300 in consideration of a wavelength band included in the light which is to be separated.

Each of the plurality of optical filters 250_k includes, like the optical filter 100 of FIG. 1, a first reflector REₖ₁ including a plurality of first gratings GRₖ₁, which have sub-wavelength shape dimensions and are periodically arranged, and a second reflector REₖ₂ spaced apart from the first reflector REₖ₁ and including a plurality of second gratings GRₖ₂, which have sub-wavelength shape dimensions and are periodically arranged.

Each of the plurality of optical filters 250_k is chosen so that the first reflector REₖ₁ and the second reflector REₖ₂ have different materials or different geometric structures and a transmission spectrum having a center wavelength λₖ is achieved.

The optical filter 250_1 may a first reflector RE₁₁ and a second reflector RE₁₂, and thicknesses t₁₁ and t₁₂, periods p₁₁ and p₁₂, and widths w₁₁ and w₁₂ of first and second gratings GR₁₁ and GR₁₂, and a distance t₁₀ between the first reflector RE₁₁ and the second reflector RE₁₂ may be selected such that a transmission spectrum having a center wavelength A₁ is obtained. The thicknesses t₁₁ and t₁₂, the periods p₁₁ and p₁₂, and the widths w₁₁ and w₁₂ of the first and second gratings GR₁₁ and GR₁₂ have values less than the center wavelength λ₁.

The optical filter 250_k may include a first reflector REₖ₁ and a second reflector REₖ₂, and thicknesses tₖ₁ and tₖ₂, periods pₖ₁ and pₖ₂, and widths wₖ₁ and wₖ₂ of first and second gratings GRₖ₁ and GRₖ₂, and a distance tₖ₀ between the first reflector REₖ₁ and the second reflector REₖ₂ may be selected such that a transmission spectrum having a center wavelength λₖ is obtained. The thicknesses tₖ₁ and tₖ₂, the periods pₖ₁ and pₖ₂, and the widths wₖ₁ and wₖ₂ of the first and second gratings GRₖ₁ and GRₖ₂ have values less than the center wavelength λₖ.

The optical filter 250_n may include a first reflector REₙ₁ and a second reflector REₙ₂, and thicknesses tₙ₁ and tₙ₂, periods pₙ₁ and pₙ₂, and widths wₙ₁ and wₙ₂ of first and second gratings GRₙ₁ and GRₙ₂, and a distance tₙ₀ between the first reflector REₙ₁ and the second reflector REₙ₂ may be selected such that a transmission spectrum having a center wavelength λₙ is obtained. The thicknesses tₙ₁ and tₙ₂, the periods pₙ₁ and pₙ₂, and the widths wₙ₁ and wₙ₂ of the first and second gratings GRₙ₁ and GRₙ₂ have values less than the center wavelength λₙ.

Longitudinal directions of the first and second gratings GRₖ₁ and GRₖ₂ provided in the plurality of optical filters 250_k may be parallel to one another and may be, for example, a y-direction.

As described with reference to FIGS. 3 through 6, the variables tₖ₁, tₖ₂, pₖ₁, pₖ₂, wₖ₁, wₖ₂, and tₖ₀ of the optical filters 250_k may be adjusted so that the spectrometer 200 covers a predetermined range of wavelengths and center wavelengths of transmission wavelength bands of the optical filters 250_k are uniformly distributed in the predetermined range of wavelengths.

The sensor substrate 210 and the plurality of optical filters 250_k may be monolithically formed. That is, the plurality of first gratings GRₖ₁ may be directly formed on the sensor substrate 210, and a first material layer 225, the second gratings GRₖ₂, and a second material layer 235 may be sequentially formed.

For the ease of a manufacturing process, the thicknesses tₖ₁ of the first gratings GRₖ₁ included in the plurality of optical filters 250_k may be the same and the distances tₖ₀ between the first reflectors REₖ₁ and the second reflectors REₖ₂ of the plurality of optical filters 250_k may also be the same. This is because it may be easier to form the plurality of second gratings GRₖ₂ on the same plane of the first material layer 225. Likewise, the thicknesses tₖ₂ of the second gratings GRₖ₂ formed on the first material layer 225 may also be the same.

In this structure, major variables related to transmission characteristics of each optical filter 250_k may be wₖ₁, wₖ₂, pₖ₁, and pₖ₂, and an appropriate combination of the variables may be set in consideration of achieving an FWHM and the center wavelength λₖ.

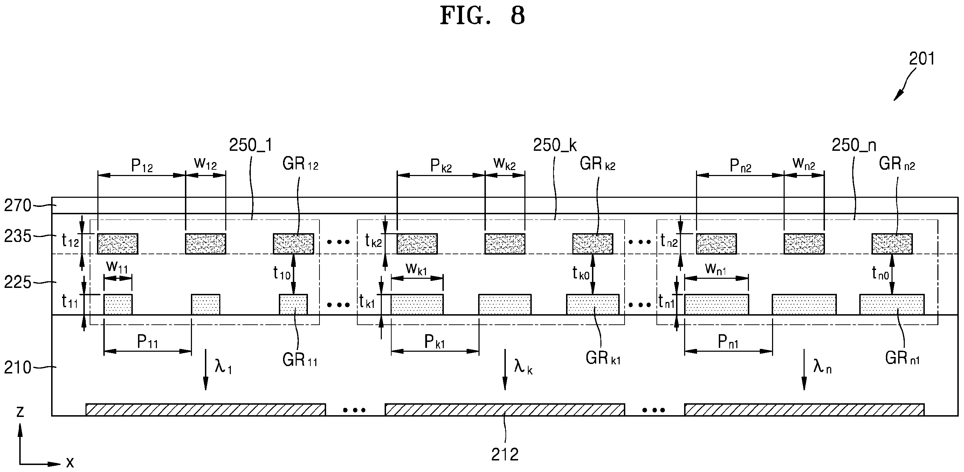

FIG. 8 is a cross-sectional view illustrating a structure of a spectrometer 201 according to another example embodiment.

The spectrometer 201 is different from the spectrometer 200 of FIG. 7 in that the spectrometer 201 further includes a polarizer 270. The polarizer 270 may have a polarization axis parallel to a longitudinal direction of the first and second gratings GRₖ₁ and GRₖ₂. That is, the polarizer 270 may allow only polarized light parallel to the longitudinal direction to be transmitted therethrough and be incident on the plurality of optical filters 250_k. Light to be separated incident on the spectrometer 201 may include various pieces of polarized light. Spectral performance, that is, a transmittance of a transmission wavelength band achieved by each optical filter 250_k, is the highest when polarization direction is parallel to the longitudinal direction of the first and second gratings GRₖ₁ and GRₖ₂ included in the optical filter 250_k. Accordingly, spectral performance may be improved with the addition of the polarizer 270 having the polarization axis. As shown in FIG. 8, the polarizer 270 may be directly adhered to the second material layer 235. However, embodiments are not limited thereto, and the polarizer 270 may be located at any position in an optical path through which light to be separated travels to an array of the optical filters 250_k.

Since the polarizer 270 allows only polarized light parallel to the polarization axis from among pieces of polarized light to be transmitted therethrough, the amount of light incident on the optical filters 250_k may be reduced, thereby reducing efficiency.

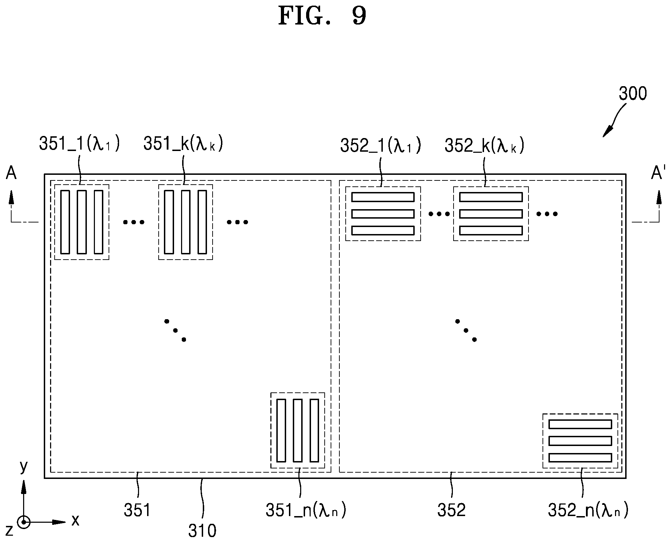

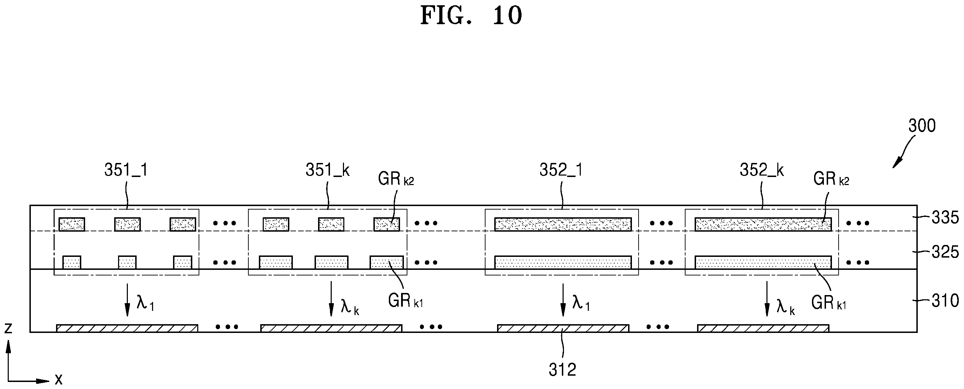

FIG. 9 is a plan view illustrating a structure of a spectrometer 300 according to another example embodiment. FIG. 10 is a cross-sectional view taken along line A-A' of FIG. 9.

The spectrometer 300 may include a first group 351 and a second group 352 that are divided according to longitudinal directions of the gratings GRₖ₁ and GRₖ₂ included in optical filters 351_k and 352_k (where k=1, ..., and n). The first group 351 may include the plurality of optical filters 351_k, and the longitudinal direction of the gratings GRₖ₁ and GRₖ₂ included in the optical filters 351_k may be a first direction, for example, a y-direction. The second group 352 may include the plurality of optical filters 352_k, and the longitudinal direction of the gratings GRₖ₁ and GRₖ₂ included in the optical filters 352_k may be a second direction, for example, an x-direction, that is perpendicular to the first direction.

A wavelength band covered by the plurality of optical filters 351_k included in the first group 351 and a wavelength band covered by the plurality of optical filters 352_k included in the second group 352 may be set to be the same or similar to each other. At least one from among the optical filters 351_k included in the first group 351 and at least one from among the optical filters 352_k included in the second group 352 may have the same transmission wavelength band. Although all of wavelengths denoted by λ₁ through λₙ are included in each group in FIG. 9, embodiments are not limited thereto.

As shown in FIG. 10, a sensor substrate 310 in which a plurality of light detection elements 312 are formed and the plurality optical filters 351_k and 352_k may be monolithically formed. That is, the plurality of first gratings GRₖ₁ may be directly formed on the sensor substrate 310, and a fourth material layer 325, the second gratings GRₖ₂, and a fifth material layer 335 may be sequentially formed.

Since the spectrometer 300 having this structure includes one set of gratings GRₖ₁ and GRₖ₂ whose longitudinal directions are perpendicular to each other, the spectrometer 300 does not include an additional polarizer. Even when light to be separated includes various pieces of polarized light, the spectrometer 300 may have desired spectral performance without reducing spectral efficiency. However, embodiments are not limited thereto, and in another example embodiment, an additional polarizer having a polarization axis parallel to the longitudinal direction of each of the gratings GRₖ₁ and GRₖ₂ may be further provided on each of the plurality of optical filters 351_k and 352_k to improve spectral performance of each polarized light.

The structure of FIG. 8 or the structure of FIG. 9 may be selected considering a beam diameter of light to be separated.

The above-described spectrometer may be applied to various optical apparatuses and sensors. For example, the spectrometer may be applied to a gas sensor or a chemical sensor. The sensor may recognize types of various molecules present in the air and detect a density thereof by using the spectrometer. In this case, the sensor may use the fact that a transmittance varies according to a wavelength due to a type and a density of a component.

Also, the spectrometer may be used as a device for examining an object. For example, the spectrometer may be used as a device for analyzing a position or a shape of an object or analyzing a component or a physical property of an object according to Raman spectroscopy.

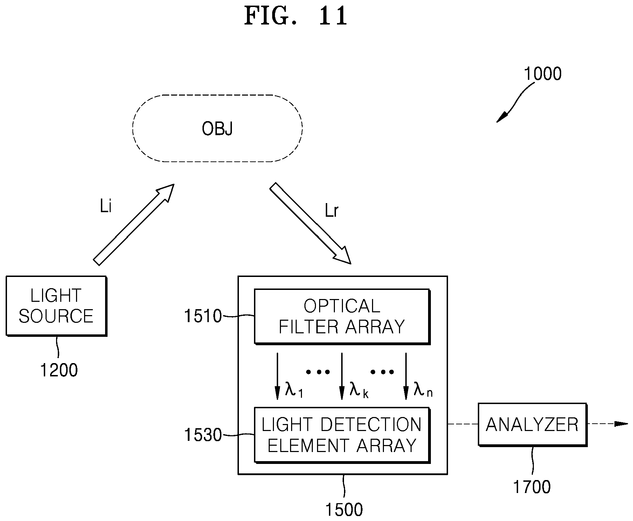

FIG. 11 is a block diagram illustrating a configuration of an optical apparatus 1000 according to an example embodiment.

The optical apparatus 100 includes a light source 1200 configured to emit light to an object OBJ, a spectrometer 1500 located on an optical path of light emitted by the light source 1200 and reflected from or scattered from or transmitted into the object OBJ, and an analyzer 1700 configured to analyze at least one from among a physical property, a shape, a position, and a movement of the object OBJ by analyzing light detected by the spectrometer 1500.

The spectrometer 1500 may include an optical filter array 1510 and a light detection element array 1530. The optical filter array 1510 may include a plurality of optical filters using an asymmetric double grating structure as described above. Accordingly, excellent spectral performance may be achieved, that is, center wavelengths may be uniformly distributed in a desired wavelength band, a transmittance may be high, and an FWHM may be small.

An operation of the optical apparatus 1000 will now be explained by using Raman spectroscopy.

Raman spectroscopy uses a phenomenon in which when light of a single wavelength is scattered by interacting with molecular vibrations of a material of the object OBJ, energy state is shifted.

Light Li emitted by the light source 1200 may act as exciting light for the object OBJ. The light source 1200 may emit short-wavelength light suitable to detect a wavelength shift. For example, the light source 1200 may emit short-wavelength laser light in the form of pulses. Light is scattered due to a molecular structure in the object OBJ. Light Lr output from the object OBJ is scattered light that has a converted wavelength due to the molecular structure in the object OBJ, and the scattered light may include various spectra having different degrees of wavelength conversion according to molecular states in the object OBJ, which is referred to as a Raman signal.

When the Raman signal is incident on the spectrometer 1500, each of the optical filters constituting the optical filter array 1510 may transmit light having a wavelength corresponding thereto, the transmitted light may be incident on a light detection element of the light detection element array 1530, and an energy level of the transmitted light may be detected.

The detected Raman signal is analyzed by the analyzer 1700. The Raman signal may include information about a wavelength shift that occurs from a wavelength of incident light, and may include information related to molecular vibrations of a material as an energy shift, for example, information about a molecular structure or a bonding type and information about a functional group. A Raman peak in a Raman spectrum may vary according to a molecular component of the object OBJ, and for example, whether glucose, urea, ceramide, keratin, or collagen included in blood or intercellular fluid of the object OBJ is included may be analyzed. As such, the analyzer 1700 may analyze a material component, a density, and a distribution amount in the object OBJ from the light from the object OBJ, that is, the Raman signal. The analyzer 1700 may be implemented with software, hardware (e.g., a circuit, a microchip, a processor, etc.), or a combination of both software and hardware.

The optical apparatus 1000 may be used as a three-dimensional (3D) optical sensor, that is, an apparatus for sensing a shape and an operation of the object OBJ, which will now be explained as follows.

The light source 1200 may emit the light Li including a plurality of wavelength bands. The light Li may be emitted to scan the object OBJ. To this end, an optical element such as a beam steering device may be further located between the light source 1200 and the object OBJ.

The light Lr from the object OBJ is received by the spectrometer 1500. The spectrometer 1500 may include the optical filter array 1510 configured to transmit light to detect the light including the plurality of wavelength bands emitted by the light source 1200.

The analyzer 1700 may analyze information about the object OBJ from a signal of the light including the plurality of wavelengths detected by the spectrometer 1510. For example, the analyzer 1700 may determine a 3D shape of the object OBJ by performing an operation for measuring a time-of-flight from the detected optical signal. Alternatively, the analyzer 1700 may determine a shape of the object OBJ by directly measuring a time or performing an operation using correlation.

When the light source 1200 emits a plurality of pieces of light having different wavelengths and the spectrometer 1500 may detect the light Lr from the object OBJ according to wavelengths, for example, a speed at which the object OBJ is scanned may be increased and information about a position and a shape of the object OBJ may be obtained at a relatively high speed.

Although the optical apparatus 1000 analyzes a position and a shape of the object OBJ by analyzing light from the object OBJ or analyzing a type, a component, a density, and a physical property of the object OBJ by using Raman spectroscopy that detects a wavelength shift due to the object OBJ, embodiments are not limited thereto.

The optical apparatus 1000 may also include a controller for controlling an overall operation of the optical apparatus 1000, and may include a memory in which programs and other data needed to perform an operation of the analyzer 1700 are stored. The controller may be implemented with hardware (e.g., a circuit, a microchip, a processor, etc.), software, or a combination of both hardware and software. Further, the controller and the analyzer 1700 may be integrated into one component.

An operation result of the analyzer 1700, that is, information about a shape, a position, and a physical property of the object OBJ, may be transmitted to another unit. For example, the information may be transmitted to a medical device using information about a property of the object OBJ, for example, biometric information, or an autonomous device requiring information about a 3D shape, a movement, and a position of the object OBJ. Alternatively, the unit to which the information is transmitted may be a display device or a printer that outputs a result. Alternatively, the unit may be, but is not limited to, a smartphone, a mobile phone, a personal digital assistant (PDA), a laptop, a personal computer (PC), a wearable computing device, or a mobile or non-mobile computing device.

Since the above-described optical filter has a high degree of freedom in achieving a transmission wavelength band and an FWHM by using an asymmetric double grating structure, the optical filter may provide excellent transmittance characteristics at various center wavelengths.

The optical filter may be applied to a spectrometer, may have a small structure and excellent spectral performance, and may be applied to various optical apparatuses.

While the present disclosure has been particularly shown and described with reference to example embodiments thereof by using specific terms, the embodiments and terms have merely been used to explain the present disclosure and should not be construed as limiting the scope of the present disclosure as defined by the claims. The example embodiments should be considered in a descriptive sense only and not for purposes of limitation. Therefore, the scope of the present disclosure is defined not by the detailed description of the present disclosure but by the appended claims, and all differences within the scope will be construed as being included in the present disclosure.

## Claims

1. An optical filter comprising:
a first reflector comprising a plurality of first gratings having a first sub-wavelength dimension and being arranged to recur at a first interval in a first direction; and
a second reflector spaced apart from the first reflector and comprising a plurality of second gratings, the plurality of second gratings having a second sub-wavelength dimension and being arranged to recur at a second interval in a second direction parallel to the first direction,
wherein the first reflector and the second reflector include at least one of different materials and different geometric structures from each other.

2. The optical filter of claim 1, wherein the first sub-wavelength dimension is different from the second sub-wavelength dimension, or the first interval is different from the second interval.

3. The optical filter of claim 1 or 2, wherein the first interval is identical to the second interval,
wherein first widths of first cross-sections of the plurality of first gratings in a third direction perpendicular to a first longitudinal direction of the plurality of first gratings are different from second widths of second cross-sections of the plurality of second gratings in a fourth direction perpendicular to a second longitudinal direction of the plurality of second gratings.

4. The optical filter of any preceding claim, wherein the plurality of first gratings include a first material having a first refractive index and the plurality of second gratings include a second material having a second refractive index different from the first refractive index.

5. The optical filter of any preceding claim, wherein the plurality of first gratings and the plurality of second gratings are arranged so that longitudinal directions of the plurality of first gratings and the plurality of second gratings are parallel to each other.

6. The optical filter of claim 1, wherein cross-sections of the plurality of first gratings and the plurality of second gratings in directions perpendicular to longitudinal directions of the plurality of first gratings and the plurality of second gratings have one of rectangular shapes, trapezoidal shapes, polygonal shapes, circular shapes, elliptical shapes, semi-circular shapes, and semi-elliptical shapes.

7. The optical filter of any preceding claim, further comprising:
a substrate configured to support the plurality of first gratings and including a material having a third refractive index less than a first refractive index of the plurality of first gratings, and optionally further comprising:
a fourth material layer having a fourth refractive index less than the first refractive index of the plurality of first gratings and configured to cover the plurality of first gratings.

8. The optical filter of claim 7, further comprising:
a fifth material layer located on the fourth material layer, having a fifth refractive index less than a second refractive index of the plurality of second gratings, and configured to cover the plurality of second gratings, and optionally wherein the fourth material layer and the fifth material layer include an identical material.

9. A spectrometer comprising:
a sensor substrate comprising a plurality of light detection elements; and
a plurality of optical filters according to any preceding claim arranged to respectively correspond to the plurality of light detection elements, each optical filter of the plurality of optical filters having a transmission wavelength band that is different from transmission wavelength bands of other optical filters of the plurality of optical filters.

10. The spectrometer of claim 9, wherein center wavelengths of transmission wavelength bands of the plurality of optical filters are distributed in a predetermined wavelength band.

11. The spectrometer of claim 9 or 10, wherein the plurality of first gratings or the plurality of second gratings included in the each of the plurality of optical filters have a uniform thickness.

12. The spectrometer of claim 9, 10 or 11, wherein the sensor substrate and the plurality of optical filters are monolithically formed.

13. The spectrometer of any of claims 9 to 12, when dependent on claim 5, further comprising:
a polarizer having a polarization axis parallel to the longitudinal directions so that polarized light parallel to the longitudinal directions is incident on the plurality of optical filters.

14. The spectrometer of any of claims 9 to 13, wherein the plurality of optical filters comprise:
a first group of optical filters whose gratings have a first longitudinal direction parallel to a first direction; and
a second group of optical filters whose gratings have a second longitudinal direction perpendicular to the first direction, and optionally wherein at least one optical filter included in the first group of optical filters and at least one optical filter included in the second group of optical filters have an identical transmission wavelength band.

15. An optical apparatus comprising:
a light source configured to emit light to an object;
a spectrometer according to any of claims 9 to 14 located on an optical path of the light emitted by the light source and reflected from the object; and
an analyzer configured to analyze at least one from among a physical property, a shape, a position, and a movement of the object by analyzing the light detected by the spectrometer.
